# EUROPÄISCHE PATENTSCHRIFT

(11) **EP 1 229 623 B1**
(45) Veröffentlichungstag und Bekanntmachung des Hinweises auf die Patenterteilung: **07.06.2006**
(21) Anmeldenummer: 02001567.3
(22) Anmeldetag: 23.01.2002
(51) Int. Cl.: H02G 3/04

(54) **Kabelkanal**
Cable duct
Conduite de câbles

(30) Priorität: 06.02.2001 DE 20102008 U
(43) Veröffentlichungstag der Anmeldung: 07.08.2002
(73) Patentinhaber: Tehalit GmbH, 67716 Heltersberg (DE)
(72) Erfinder: Wittmann, Jan, 67714 Waldfischbach-Burgalben (DE); Huber, Sabine, 67705 Stelzenberg (DE)
(74) Vertreter: Patentanwälte Möll und Bitterich

(56) Entgegenhaltungen:
- EP-A- 0 862 253
- DE-A- 4 103 707

## Beschreibung

Die Erfindung betrifft Kabelkanäle gemäß dem Oberbegriff des Anspruchs 1.

Kabelkanäle, d. h. Leitungsführungskanäle, Geräteeinbaukanäle bzw. Verdrahtungskanäle bestehen aus einem meist U- oder C-förmigen Unterteil und einem oder mehreren lösbar aufrastbaren Oberteilen. Die Unterteile bestehen aus einem Boden, zwei Seitenwänden und Deckelhalteprofilen an den Seitenwänden. In vielen Fällen sind an der Bodeninnenseite Halteleisten angeformt, so dass Zusatzelemente wie Trennwände, Einbaugeräte und dergleichen befestigt werden können.

Aufgrund der offenen Trogform liegen die Installationsleitungen lose im Kanalunterteil. Wird das Kanalunterteil auf der Wand oder Decke montiert, so fallen die Leitungen leicht aus dem Kanalunterteil heraus. Um die Leitungen im Kanal zu halten, werden sogenannte Klammern eingesetzt. Die Klammern verschließen hierbei die offene Vorderseite der Kanalunterteile. Insbesondere bei der Deckenmontage sind Klammern für den Halt der Leitungen im Kanalunterteil unerlässlich. Bei der Deckenmontage halten die Klammern oft ganze Leitungsbündel im Kanalunterteil.

Die Klammern erleichtern aber nicht nur die Erstbelegung des Kanalunterteils mit Leitungen, sondern sie unterstützen auch das spätere Nachlegen von zusätzlich benötigten Leitungen. Hierbei verhindern sie ebenfalls das Herausfallen der bereits eingelegten Leitungen bei abgenommenem Kanaloberteil. Das Kanalunterteil kann so Stück für Stück geöffnet, d. h. die Klammern in eine Position verschwenkt werden, bei der ein Nachlegen von Leitungen möglich ist, und anschließend wieder verschlossen werden. Entsprechende Beispiele finden sich in der EP 0 239 945 B oder der EP 0 862 253 A.

Die Klammern besitzen einen Kopf und einen Fuß. Der Fuß ist federnd ausgebildet und wird auf eines der Deckelhalteprofile aufgesteckt. Der Kopf wird mit dem gegenüberliegenden Deckelhalteprofil verhakt. Dank der federnden Eigenschaften des Fußes kann der Klammerkopf vom Kanalunterteil gelöst und die Klammer so weit verschwenkt werden, dass Leitungen eingelegt oder herausgenommen werden können.

Da diese Klammern nicht integraler Bestandteil des Kabelkanals sind, muss der Hersteller sie auf irgend eine Weise dem Kabelkanal beilegen. Dies geschieht häufig durch Bündeln oder Einschweißen in Folienbeutel. Die Beutel oder Bündel werden dann z. B. mit einem Klebestreifen im Kanal fixiert. Diese Klebestreifen oder Klammerbündel können sich bei Temperaturschwankungen oder mechanischen Belastungen, z. B. Rütteln beim Verladen und Transport, lösen. Letztlich hat der Elektroinstallateur auf der Baustelle häufig einen Kabelkanal, der keine Klammern mehr enthält. Die Klammern befinden sich dann entweder beim Elektrogroßhändler oder auf dem Boden des Transportkartons.

Auch beim Hersteller führt die Handhabung der vielen Einzelteile zu einem erhöhten Zeit- und Kostenaufwand. Jede Klammer muss nach der Produktion erfasst und gezählt, zu mehreren in Kartons verpackt und gelagert werden. Auf der Baustelle müssen die Klammern ausgepackt werden. Dabei fällt das Verpackungsmaterial als Abfall an. Das ist unbefriedigend.

Aus der EP 0 862 253 A ist bereits eine Lösung bekannt, mit der das Verpackungsproblem gelöst werden kann. Die in dieser Schrift offenbarten Klammern sind entweder an ihren Längsseiten oder an ihren Unterseiten mit Rastvorrichtungen ausgerüstet, die es ermöglichen, dass eine Vielzahl von Klammern entweder seitlich nebeneinanderliegend oder flach aufeinanderliegend zu einem Klammervielfach zusammengesteckt werden können. Dieses Klammervielfach kann dann auf die an der Bodeninnenseite des Kanalunterteils vorgesehenen Halteleisten aufgerastet werden. Dies geschieht bereits im Herstellerwerk, so dass kein Verpackungsmaterial mehr benötigt wird.

Diese Klammern und ihre Handhabung sind jedoch material-, zeit- und kostenaufwändig. Zunächst müssen die Klammern mit zusätzlichen Rastvorrichtungen ausgerüstet werden, mit deren Hilfe sie zu Vielfachen zusammengesteckt werden können. Dieses Zusammenstecken im Herstellerwerk ist ein zusätzlicher Montagevorgang. Auf der Baustelle muss der Installateur das Klammervielfach dann wieder auseinandernehmen. Auch dies ist ein zusätzlicher Zeit- und Kostenfaktor. Die zusätzlichen Rastvorrichtungen bedingen einen zusätzlichen Materialaufwand; da sie an der fertig montierten Klammer verbleiben, beschränken sie auch den freien Kanalinnenraum.

Der vorliegenden Erfindung liegt die Aufgabe zugrunde, eine Lösung für das geschilderte Problem anzugeben, welche diese Nachteile nicht aufweist.

Diese Aufgabe wird gelöst durch einen Kabelkanal mit den Merkmalen des Anspruchs 1.

Die vorliegende Erfindung greift die Idee des Klammervielfachs auf, löst diese Idee jedoch auf eine völlig neuartige Weise. Sie verwendet zusätzliche Halter, die zwei Klammern seitlich, vorzugsweise an deren Kopf, lösbar miteinander verbinden. Des weiteren sind nur diese zusätzlichen Halter mit den Rastvorrichtungen ausgerüstet, die das Aufrasten auf die Halteleiste am Kanalboden ermöglichen. Nach dem Trennen von Halter und Klammer unterscheidet sich die Klammer in keiner Weise mehr von einer Klammer, die herkömmlich einzeln hergestellt wurde.

Da auch die Füße je zweier Halteklammern miteinander lösbar verbunden sind, erhält man bei Verwendung von nur zwei zusätzlichen Haltern ein Klammervierfach, entsprechend der Zahl an Klammern, die üblicherweise zur Stabilisierung eines Kanalabschnitts verwendet werden.

Gemäß einer vorteilhaften Ausgestaltung der Erfindung ist die Verbindung der Halteklammern untereinander und/oder mit den Haltern materialschlüssig. Dadurch wird das Klammervierfach stabil und leicht handhabbar.

Vorzugsweise sind die Verbindungen der Halteklammern untereinander und/oder mit den Haltern als Sollbruchstellen ausgebildet. Dies ermöglicht das Vereinzeln der Klammern ohne Werkzeug.

Vorteilhafterweise sind Halter und Halteklammern einstückig aus Kunststoff hergestellt.

Zwecks lösbarer Verbindung des Klammervierfachs mit den Halteleisten tragen die Halter je zwei Rasthaken, passend zu den jeweiligen Halteleisten am Boden des Kabelkanals.

Anhand der Zeichnung soll die Erfindung in Form eines Ausführungsbeispiels näher erläutert werden. Es zeigen
- Fig. 1: als Schrägansicht ein Kanalunterteil mit montierter Halteklammer,
- Fig. 2: als Schrägansicht ein komplettes Klammervierfach und
- Fig. 3: einen Querschnitt durch ein Kanalunterteil mit dem Klammervierfach der Fig. 2, aufgerastet auf eine Halteleiste.

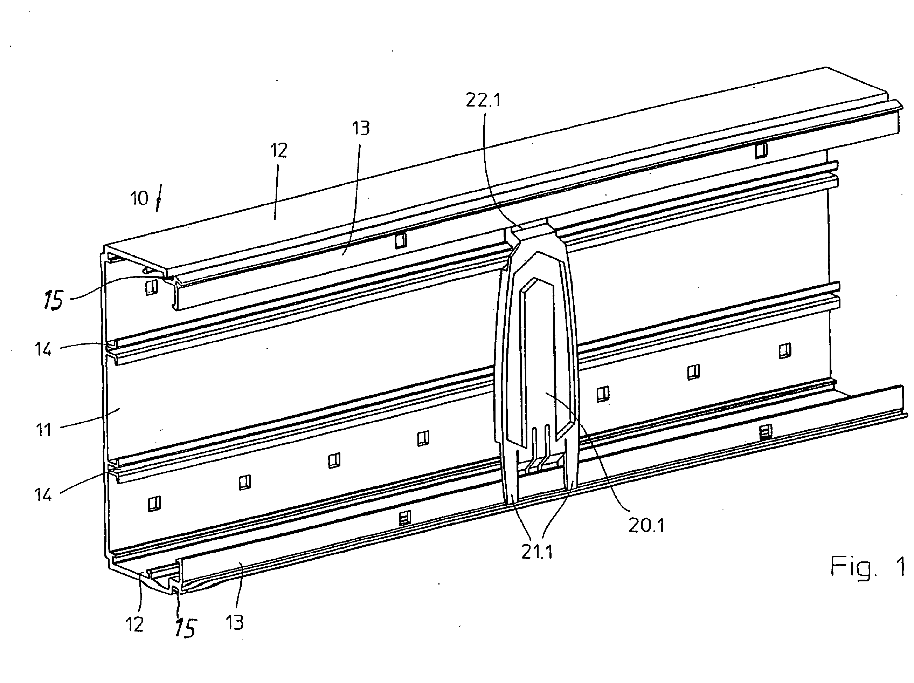

Fig. 1 zeigt ein Unterteil 10 eines Kabelkanals mit montierter Halteklammer 20.1 in Schrägansicht. Das Kanalunterteil 10 besteht aus einem Boden 11, zwei Seitenwänden 12 mit den Deckelhalteprofilen 15 und Halteleisten 14 an der Bodeninnenseite. Die Klammer 20.1 besitzt einen mit federnden Zungen ausgerüsteten Fuß 21.1 und einen Kopf 22.1. Mit dem Fuß 21.1 ist die Klammer 20.1 auf ein am Deckelhalteprofil 15 angeformtes Klammerhalteprofil 13 federnd aufgesteckt. Der Kopf 22.1 ist hinter dem gegenüberliegenden Klammerhalteprofil 13 verhakt. Zum Einlegen oder Herausnehmen zusätzlicher Kabel wird der Kopf 22.1 vom Klammerhalteprofil 13 gelöst und die Klammer 20.1 entweder nach innen oder nach außen geschwenkt. Diese Technik ist aus der EP 0 239 945 B bekannt.

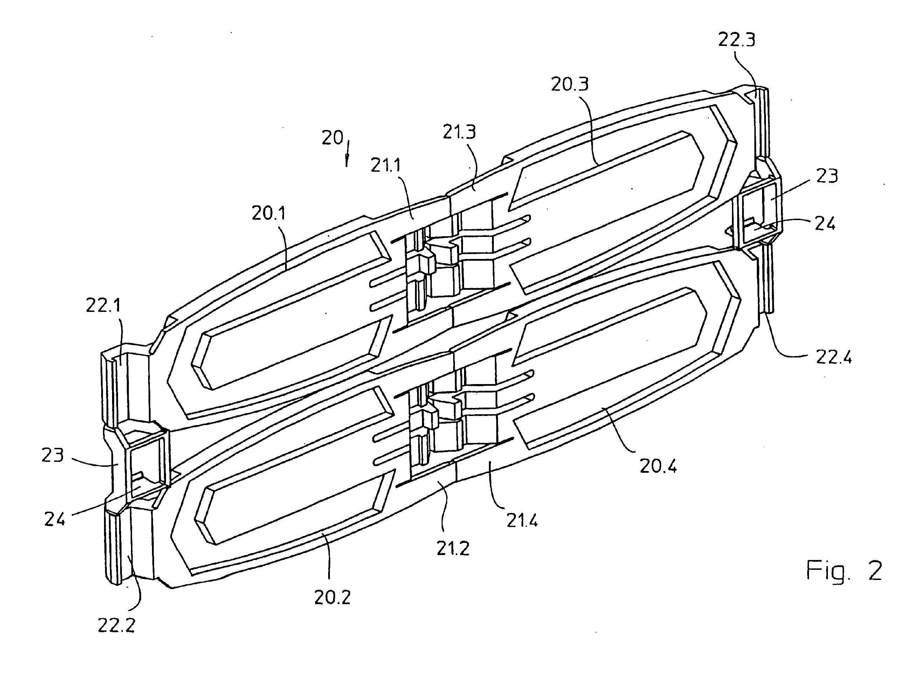

Fig. 2 zeigt ebenfalls als Schrägansicht ein aus vier Halteklammern 20.1, 20.2, 20.3, 20.4 gebildetes Klammervierfach 20. Das gesamte Klammervierfach 20 ist einstückig aus Kunststoff gespritzt, wobei die Füße 21.1, 21.3; 21.2, 21.4 je zweier Klammern 20.1, 20.3; 20.2, 20.4 materialschlüssig, jedoch dank einer Sollbruchstelle lösbar miteinander verbunden sind. Die Köpfe 22.1, 22.2; 22.3, 22.4 je zweier nebeneinander liegender Klammern 20.1, 20.2; 20.3, 20.4 sind über je einen zusätzlichen Halter 23 ebenfalls materialschlüssig und dank Sollbruchstellen lösbar miteinander verbunden. Die Halter 23 besitzen Rasthaken 24, die mit den Halteleisten 14 am Boden 11 des Kanalunterteils 10 korrespondieren.

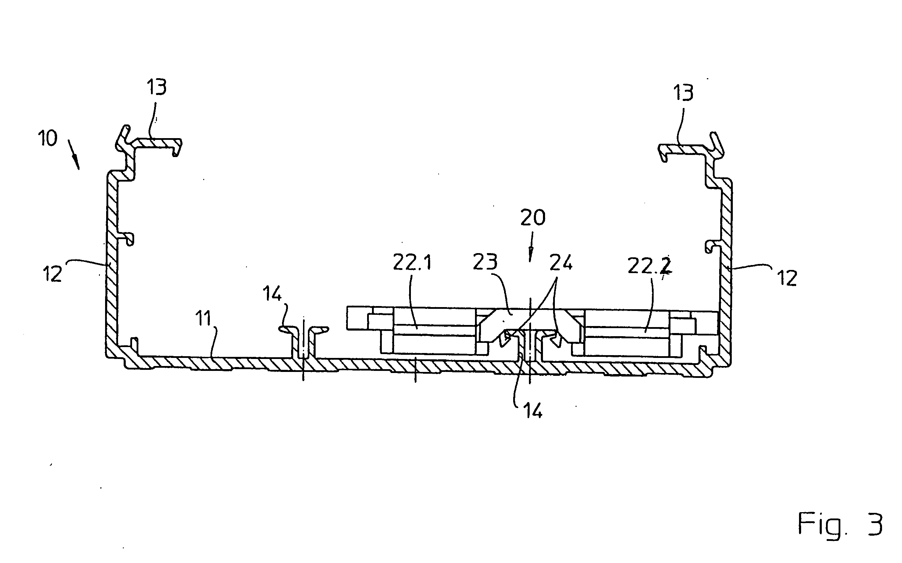

Fig. 3 zeigt einen Querschnitt durch das Kanalunterteil 10. Das Klammervierfach 20 ist auf einer der Halteleisten 14 aufgerastet. In diesem Zustand wird das Kanalunterteil 10 gelagert, versandt und auf die Baustelle geliefert. Dort zieht der Installateur das Klammervierfach 20 von der Halteleiste 14 ab, bricht zunächst die Verbindung im Bereich der Füße, dann im Bereich der Halter 23 auseinander und hat dann vier einzelne Halteklammern, die sich in keiner Weise von den herkömmlichen Halteklammern unterscheiden. Der Installateur kann die Halteklammern dann gemäß Fig. 1 an den Klammerhalteprofilen 13 des Kanalunterteils 10 montieren.

Die beiden zusätzlichen Halter 23 werden nicht mehr benötigt. Das Kunststoffmaterial wird recycelt.

## Patentansprüche

1. Kabelkanal, im wesentlichen umfassend
- ein Kanalunterteil (10) mit
- einem Boden (11),
- zwei Seitenwänden (12),
- Deckelhalteprofilen (15) an den Seitenwänden (12)
- und Halteleisten (14) an der Innenseite des Bodens (11)
- und Halteklammern (20.1, 20.2, 20.3, 20.4) mit
- einem Fuß (21.1)
- und einem Kopf (22.1),
- die Halteklammern (20.1, ... 20.4) weisen Einrichtungen (23) auf, mit denen sie zu einem Vielfach (20) verbunden und zeitweilig auf die Halteleisten (14) aufgesteckt werden können,
**gekennzeichnet durch** die Merkmale:
- die Füße (21.1, 21.3; 21.2, 21.4) je zweier Halteklammern (20.1, 20.3; 20.2, 20.4) sind miteinander lösbar verbunden,
- je zwei Halteklammern (20.1, 20.2; 20.3, 20.4) sind an ihren Längsseiten mittels eines Halters (23) lösbar verbunden,
- die Halter (23) besitzen eine Rastvorrichtung (24), die mit den Halteleisten (14) korrespondiert.

2. Kabelkanal nach Anspruch 1, **gekennzeichnet durch** das Merkmal:
- die Verbindung der Halteklammern (20.1, ... 20.4) untereinander und/oder mit den Haltern (23) ist materialschlüssig.

3. Kabelkanal nach Anspruch 2, **gekennzeichnet durch** das Merkmal:
- die Verbindungen der Halteklammern (20.1, ... 20.4) untereinander und/oder mit den Haltern (23) sind als Sollbruchstellen ausgebildet.

4. Kabelkanal nach Anspruch 1, 2 oder 3, **gekennzeichnet durch** das Merkmal:
- die Halter (23) und die Halteklammern (20.1, ... 20.4) sind einstückig aus Kunststoff hergestellt.

5. Kabelkanal nach einem der Ansprüche 1 bis 4, **gekennzeichnet durch** das Merkmal:
- der Halter (23) trägt zwei Rasthaken (24).

6. Kabelkanal nach einem der Ansprüche 1 bis 5, **gekennzeichnet durch** das Merkmal:
- ein Halter (23) verbindet die Köpfe (22.1, 22.2; 22.3, 22.4) je zweier Halteklammern (20.1, ... 20.4).

## Claims

1. Cable duct, essentially comprising
- a duct lower part (10) with
- a bottom (11),
- two side walls (12),
- cover retaining profiles (15) at the side walls (12)
- and retaining strips (14) at the inside of the bottom (11)
- and retaining clamps (20.1, 20.2, 20.3, 20.4) with
- a base (21.1)
- and a head (22.1),
- the retaining clamps (20.1,...20.4) comprise devices (23) by which they can be connected to form amultiple (20) and temporarily placed on the retaining strips (14),
**characterised by** the features:
- the bases (21.1, 21.3; 21.2, 21.4) of each two retaining clamps (20.1, 20.3; 20.2, 20.4) are detachably connected together,
- each two retaining clamps (20.1, 20.2; 20.3, 20.4) are detachably connected at their longitudinal sides by means of a clip (23),
- the clips (23) have a locking device (24) which corresponds with the retaining strips (14).

2. Cable duct according to Claim 1, **characterised by** the feature:
- the connection between the retaining clamps (20.1,...20.4) and/or between the latter and the clips (23) is integral.

3. Cable duct according to Claim 2, **characterised by** the feature:
- the connections between the retaining clamps (20.1,...20.4) and/or between the latter and the clips (23) are formed as predetermined breaking points.

4. Cable duct according to Claim 1, 2 or 3, **characterised by** the feature:
- the clips (23) and the retaining clamps (20.1,...20.4) are made in one piece of a plastics material.

5. Cable duct according to any one of Claims 1 to 4,
**characterised by** the feature:
- the clip (23) bears two locking hooks (24).

6. Cable duct according to any one of Claims 1 to 5,
**characterised by** the feature:
- one clip (23) connects the heads (22.1, 22.2; 22.3, 22.4) of each two retaining clamps (20.1,...20.4).

## Revendications

1. Conduit de câbles comprenant essentiellement
- une partie inférieure de conduit (10) avec
- un fond (11),
- deux parois latérales (12),
- des profilés de retenue ou de maintien de couvercle (15) sur les parois latérales (12),
- des rails de fixation (14) sur la face intérieure du fond (11)
- et des étriers de retenue (20.1, 20.2, 20.3, 20.4) avec
- un pied (21.1)
- et une tête (22.1),
- les étriers de retenue (20.1, ... 20.4) présentent des dispositifs (23) avec lesquels ils peuvent être assemblés en un multiple (20) et temporairement montés sur les rails de fixation (14),
**caractérisé par le fait que**
- les pieds (21.1, 21.3 ; 21.2, 21.4) de chaque fois deux étriers de retenue (20.1, 20.3 ; 20.2, 20.4) sont assemblés de manière détachable,
- chaque fois deux étriers de retenue (20.1, 20.2; 20.3, 20.4) sont assemblés de manière détachable par leurs grands côtés au moyen d'un support (23),
- les supports (23) possèdent un dispositif d'encliquetage (24) qui correspond aux rails de fixation (14).

2. Conduit de câbles selon la revendication 1, **caractérisé par le fait que**
- l'assemblage des étriers de retenue (20.1, ... 20.4) entre eux et/ou avec les supports (23) est réalisé par liaison de matière.

3. Conduit de câbles selon la revendication 2, **caractérisé par le fait que**
- les assemblages des étriers de retenue (20.1, ... 20.4) entre eux et/ou avec les supports (23) sont réalisés sous la forme de zones de rupture.

4. Conduit de câbles selon la revendication 1 ou 2, **caractérisé par le fait que**
- les supports (23) et les étriers de retenue (20.1, ... 20.4) sont réalisés en une pièce en matière plastique.

5. Conduit de câbles selon l'une des revendications 1 à 4, **caractérisé par le fait que**
- le support (23) porte deux crochets d'encliquetage (24).

6. Conduit de câbles selon l'une des revendications 1 à 5, **caractérisé par le fait que**
- un support (23) relie les têtes (22.1, 22.2 ; 22.3, 22.4) de chaque fois deux étriers de retenue (20.1, ... 20.4).
